# EUROPEAN PATENT APPLICATION

(11) **EP 4 579 805 A1**
(43) Date of publication of application: **02.07.2025**
(21) Application number: 24217369.8
(22) Date of filing: 04.12.2024
(51) Int. Cl.: H01M 4/48, H01M 4/60, H01M 4/66, H01M 10/36, H01M 50/489

(54) **ALUMINUM BATTERY**

(30) Priority: 29.12.2023 TW 112151584
(71) Applicant: APh ePower Co., Ltd., Kaohsiung City 821 (TW)
(72) Inventor: WU, Jui-Hsuan, Kaohsiung City 821 (TW); TSAI, Shih Po Ta, Kaohsiung City 821 (TW); CHEN, Wei-Ting, Kaohsiung City 821 (TW); WANG, Yi Hsiu, Kaohsiung City 821 (TW)
(74) Representative: Becker, Eberhard

(57) **Abstract**

An aluminum battery (100) includes a positive electrode (110), a negative electrode (120), a separator (130), and an aqueous electrolyte (140). The separator (130) is disposed between the positive electrode (110) and the negative electrode (120). The aqueous electrolyte (140) is impregnated into the separator (130), the positive electrode (110), and the negative electrode (120). When the aluminum battery (100) operates, the positive electrode (110) performs an intercalation mechanism, while the negative electrode (120) performs a chelating mechanism.

## Description

### BACKGROUND

### Technical Field

The invention relates to an aluminum battery.

### Description of Related Art

The power capacity and lifespan of the aluminum battery are affected by many factors. For example, usually positive electrode materials (such as graphite) have structural limitations. That is, if the performance of power capacity of the aluminum battery is to be improved, the structure will be destroyed, which results in shortened lifespan. On the other hand, during the cyclic charge and discharge process of the aluminum battery, aluminum plating is generated on the negative electrode and continues to become aluminum dendrites. The aluminum dendrites continue to grow and partially puncture the separator, causing a short circuit in the positive and negative electrodes, and leading to shortened lifespan.

### SUMMARY

The disclosure provides an aluminum battery which can extend lifespan and maintain better performance of power capacity.

An aluminum battery of the disclosure includes a positive electrode, a negative electrode, a separator, and an aqueous electrolyte. The separator is disposed between the positive electrode and the negative electrode. The aqueous electrolyte is impregnated into the separator, the positive electrode, and the negative electrode. When the aluminum batter operates, the positive electrode performs an intercalation mechanism, and the negative electrode performs a chelating mechanism.

In an embodiment of the disclosure, an active material in the aqueous electrolyte is an aluminum ion when the aluminum battery operates.

In an embodiment of the disclosure, the aqueous electrolyte includes water and an aluminum salt.

In an embodiment of the disclosure, a weight proportion of the aluminum salt in the aqueous electrolyte is 30wt% to 50wt%, and a total weight proportion of the water and the aluminum salt is 100wt %.

In an embodiment of the disclosure, the positive electrode includes a first metal substrate and a first coating, the first coating is disposed on the first metal substrate, and the first coating includes a metal oxide.

In an embodiment of the disclosure, the weight proportion of the above-mentioned metal oxide in the first coating is greater than or equal to 80wt% and less than 100wt%.

In an embodiment of the disclosure, the negative electrode includes a second metal substrate and a second coating, the second coating is disposed on the second metal substrate, and the second coating includes a conjugated organic molecule.

In an embodiment of the disclosure, the conjugated organic molecule includes a compound with an acid anhydride structure, a derivative compound with the acid anhydride structure, a composite of the compound with the acid anhydride structure and a carbon material, or a composite of the derivative compound with the acid anhydride structure and the carbon material.

In an embodiment of the disclosure, a weight proportion of the conjugated organic molecule in the second coating is greater than or equal to 80wt% and less than 100wt%.

In an embodiment of the disclosure, a thickness of the separator is 200 µm to 500 µm.

Based on the above, the aqueous electrolyte is used in the aluminum battery of the disclosure to generate the small-sized ions which are less likely to damage the structure of the positive electrode, so that the intercalation mechanism can be effectively performed. Moreover, the aforementioned small-sized ions replace the electrochemical mechanism with the chelating mechanism proceeded by the negative electrode to avoid the formation of aluminum dendrites, thereby extending the lifespan and maintaining better performance of power capacity.

In order to make the aforementioned features and advantages of the disclosure comprehensible, embodiments accompanied with drawings are described in detail below.

### BRIEF DESCRIPTION OF THE DRAWINGS

FIG. 1 is a schematic structural diagram of an aluminum battery according to an embodiment of the disclosure.
FIG. 2 is a schematic diagram of results in a power capacity test of examples and a comparative example.
FIG. 3 is a schematic diagram of results in a lifespan test of examples and a comparative example.

### DESCRIPTION OF THE EMBODIMENTS

In order for the content of the disclosure to be easier to understand, the following specific embodiments are given as examples in which the disclosure can actually be implemented. For the sake of clarity, many practical details are described in the following description. However, it should be understood that the practical details should not be used to limit the disclosure. In other words, in some implementations of the disclosure, the practical details are unnecessary.

In order to clearly illustrate the disclosure, the description of known aluminum battery design rules is omitted in this article. Anyone with ordinary skill in the technical field can design according to actual needs without departing from the spirit and scope of the disclosure.

Unless otherwise defined, all terms (including technical and scientific terms) used herein have the same meaning as commonly understood by persons of ordinary skill in the art to which the disclosure belongs.

Unless otherwise stated, the term "between" used in the specification to define a value range is intended to cover a range equal to and between the stated endpoint values. For example, a size range between a first value and a second value means that the size range may cover the first value, the second value, and any value between the first value and the second value.

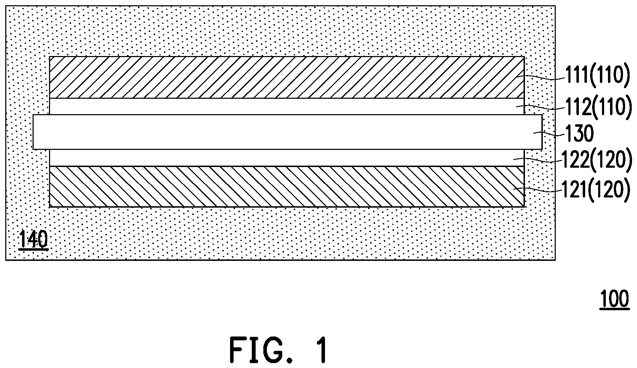

FIG. 1 is a schematic structural diagram of an aluminum battery according to an embodiment of the disclosure. Please refer to FIG. 1. In this embodiment, an aluminum battery 100 includes a positive electrode 110, a negative electrode 120, a separator 130, and an aqueous electrolyte 140. The separator 130 is disposed between the positive electrode and the negative electrode 120, and the aqueous electrolyte 140 is impregnated into the separator 130, the positive electrode 110, and the negative electrode 120.

In addition, when the aluminum battery 100 operates, the positive electrode performs an intercalation mechanism, and the negative electrode 120 performs a chelating mechanism. Accordingly, the aqueous electrolyte 140 is used in the aluminum battery 100 of this embodiment to generate the small-sized ions which are less likely to damage a structure of the positive electrode 110, so that the intercalation mechanism can be effectively performed. Moreover, the aforementioned small-sized ion replaces an electrochemical mechanism with the chelating mechanism performed by the negative electrode 130 to avoid the formation of aluminum dendrites, thereby improving the lifespan and maintaining better performance of power capacity.

For example, in the conventional composition of the aluminum battery, graphite material is often used in the positive electrode, and the electrolyte is composed of aluminum chloride and ionic liquid. In this configuration, the operating mechanism of the positive electrode performs an intercalation reaction through AlCl₄⁻ (the size is about 0.5 nm) ions to store power capacity. In other words, the operating mechanism of the positive electrode is based on embedding the AlCl₄⁻ ions into the gaps (interlayer gaps) of the structure of graphite layer. However, during the embedding, the size of the AlCl₄⁻ ion is larger than the gap (such as 0.335 nm) of the graphite layer and causes structural damage and insufficient operational stability in the cyclic charge and discharge processes of the aluminum battery. On the other hand, the aluminum plating that constitutes aluminum dendrites is generated based on the electrochemical mechanism of the negative electrode. When the aluminum dendrites pass through the separator and contact the positive electrode, additional electron channels are generated to make the aluminum battery shortcircuited.

In order to improve the above problem, in this embodiment, the positive electrode 110 includes a first metal substrate 111 and a first coating 112 disposed thereon, and the negative electrode 120 includes a second metal substrate 121 and a second coating 122. The first coating 112 includes a metal oxide (an easy intercalation structure), the second coating 122 includes a conjugated organic molecule (which is negatively charged and attracts positively charged active material), and the aqueous electrolyte 140 includes water and an aluminum salt (the operation of the aluminum battery 100 may generate the small-sized intercalated active material, such as an aluminum ion (Al³⁺)) without generating AlCl₄⁻. In this way, the structural stability of the metal oxide can improve the retention rate of the power capacity in the cyclic charge and discharge of the aluminum battery 100. The use of the conjugated organic molecule and the active material (Al³⁺) in the electrolyte for charge exchange (a non-physical intercalation mechanism, which can be called a chelating structure) allows the aluminum battery 100 to effectively perform high capacity of charge and discharge, but the disclosure is not limited to thereto.

In addition, since the aluminum battery 100 of this embodiment does not generate dendrites, a thinner separator 130 may be used to increase the volumetric energy density of the aluminum battery 100. In some embodiments, a thickness of the separator 130 is 200 µm to 500 µm, but the disclosure is not limited thereto.

In some embodiments, the first coating 112 and the second coating 122 may be made by preparing slurry with corresponding ingredients in an appropriate manner, coating the slurry on the first metal substrate 111 and the second metal substrate 121 respectively, and drying the first metal substrate 111 and the second metal substrate 121, but the disclosure is not limited to thereto.

In some embodiments, the total solid content in the slurry of the first coating 112 accounts for 20 wt% to 40 wt% of the solid content of the entire slurry, and the total solid content in the slurry of the second coating 122 accounts for 5wt% to 30wt% of the solid content of the entire slurry, but the disclosure is not limited thereto.

In some embodiments, the areal density (the area-coated film weight) of the coating film surface of the first coating 112 ranges from 5 mg/cm2 to 10 mg/cm2, while the areal density (the area-coated film weight) of the coating film surface of the second coating 122 ranges from 0.5 mg/cm2 to 10 mg/cm2, but the disclosure is not limited thereto.

In some embodiments, the first coating 112 is disposed between the first metal substrate 111 and the separator 130 and in direct contact with the separator 130, and the second coating 122 is disposed between the second metal substrate 121 and the separator 130 and in direct contact with the separator 130, but the disclosure is not limited thereto.

In some embodiments, the weight proportion of the aluminum salt in the aqueous electrolyte 140 is 30wt% to 50wt%, and the total weight proportion of water and the aluminum salt is 100wt%, but the disclosure is not limited thereto.

In some embodiments, the concentration of the aluminum salt in the aqueous electrolyte 140 is 1M to 2M, for example, 2M, but the disclosure is not limited thereto.

In some embodiments, the aluminum salt includes aluminum trifluoromethanesulfonate (Al(OTf)₃), but the disclosure is not limited thereto.

In some embodiments, the weight proportion of the metal oxide in the first coating 112 is greater than or equal to 80wt% and less than 100wt% (for example, 80wt% to 90wt%), but the disclosure is not limited thereto.

In some embodiments, the metal oxide includes vanadium trioxide (V₂O₃), but the disclosure is not limited thereto.

In some embodiments, the first coating 112 further includes a conductive carbon material and an adhesive. The weight proportion of the conductive carbon material in the first coating 112 is 5wt% to 10wt%, and the weight proportion of the adhesive in the first coating 112 is 8wt% to 10wt%, and the total proportion of the metal oxide, the conductive carbon material, and the adhesive is 100wt%, but the disclosure is not limited thereto. Here, the conductive carbon material includes Super-P, graphene, graphene oxide, or carbon nanotubes, and the adhesive includes appropriate rubber materials (such as carboxymethyl cellulose (CMC), styrene-butadiene rubber (SBR) or mixtures thereof), which are not limited by the disclosure.

In some embodiments, the weight proportion of the conjugated organic molecule in the second coating 122 is greater than or equal to 80 wt% and less than 100 wt%, but the disclosure is not limited thereto.

In some embodiments, the second coating 122 further includes the conductive carbon material and the adhesive. The weight proportion of the conductive carbon material in the second coating 122 is 8wt% to 10wt%, the weight proportion of the adhesive in the second coating 122 is 8wt% to 15wt%, and the total weight proportion of the conjugated organic molecule, the conductive carbon material, and the adhesive is 100wt%, but the disclosure is not limited thereto. Here, the conductive carbon material includes Super-P, graphene, graphene oxide, or carbon nanotubes (CNT), and the adhesive includes appropriate rubber or polyvinylidene fluoride materials, which are not limited by the disclosure.

In some embodiments, the conjugated organic molecule includes a compound with an acid anhydride structure, a derivative compound with an acid anhydride structure, a composite of the compound with the acid anhydride structure and the carbon material, or a composite of the derivative compound with the acid anhydride structure and the carbon material. For example, the compound with the acid anhydride structure includes perylenetracarboxylic dianhydride (PTCDA, CAS no: 128-69-8), the derivative compound with the acid anhydride structure includes 3,4,9,10-perylenetetracarboxylic dianhydride (PTCDI, CAS no: 81-33-4), N,N'-dimethyl-3,4,9,10-perylenedimethyl dicarboximide (MePTC, CAS no: 5521-31-3), or anthraquinone (AQ), the composite of the compound with the anhydride structure and the carbon material includes the composite of PTCDA and CNT, the composite of PTCDA and active carbon (AC), and the composite of PTCDA and graphene oxide (GO), and the composite of the derivative compound with the acid anhydride structure and the carbon material includes the composite of PTCDI and CNT, the composite of PTCDI and AC, and the composite of PTCDI and GO, but the disclosure is not limited thereto. Here, the derivate compound with the acid anhydride structure is defined as a conjugated organic bonded compound or polymer with an acid anhydride structure or a similar acid anhydride.

In some embodiments, the materials of the first metal substrate 111 and the second metal substrate 112 include aluminum foil, titanium foil, nickel foil, or other appropriate metal foil materials, which are not limited by the disclosure.

In some embodiments, the thickness of the first coating 121 ranges from 100 µm to 120 µm, and the thickness of the second coating 122 ranges from 10 µm to 200 µm. For example, when the thickness of the second coating 122 is greater than 250 µm, the electrode is easily damaged, so the second coating 122 has better operability between 10 µm and 200 µm, but the disclosure is not limited thereto. Here, the thickness of the first metal substrate 111 and the thick ness of the second metal substrate may be determined according to actual design requirements, which is not limited by the disclosure.

In some embodiments, the material of the separator 130 includes fiberglass or the like, but the disclosure is not limited thereto.

The effects achieved by the aluminum battery of the disclosure are described in more detail below with reference to Examples and Comparative Examples. In addition, although the following examples are described, the details of materials used, processes, etc. may be appropriately changed without exceeding the scope of the disclosure, and the disclosure should not be construed restrictively by the examples described below.

### <Comparative example 1>

Nickel foil is used as a metal substrate of the positive electrode, and the slurry (composed of 90wt% graphite, 2wt% Super-P, 1.5wt% CMC, and 6.5wt% SBR, which is called first slurry) is prepared according to a wet mixing method and then coated on the nickel foil. After drying, a nickel foil positive electrode with graphite coating (110 µm in thickness and 12.5mg/cm² in surface density) is formed, and aluminum foil (the metal substrate)(50 µm in thickness) is used as a negative electrode (110 µm in thickness) to mix with a non-aqueous electrolyte (aluminum chloride/1-ethyl-3-methylimidazolium chloride, where the molar ratio is 1.8:1, 150µL) to become a CR20232 coin cell, which is an aluminum battery in Comparative Example 1. Here, the wet slurry method is to stir and disperse the above ingredients and a solvent (N-methylpyrrolidone (NMP)). People with ordinary knowledge in the technical field can use a known slurry method, which is not repeated here.

### <Example 1>

The second slurry (composed of 80wt% vanadium trioxide, 10wt% Super-P, and 10wt% adhesive (polyvinylidene fluoride (PVDF)) is prepared according to the wet mixing method, and is coated on the titanium foil (a metal substrate) with a thickness of 250 µm by a square applicator and dried at 100°C for 1 hour to form a coating (70µm in thickness after drying) as a positive electrode. Next, the third slurry (composed of 56wt% PTCDA, 24% GO, 10wt% Super-P, and 10wt% PVDF) is prepared according to the wet mixing method, and is coated on the titanium foil (a metal substrate) to form a coating (45.2 µm in thickness) as a negative electrode to mix with an aqueous electrolyte (2M Al(OTf)₃)(the weight proportion of water is 40wt%, and the weight proportion of Al(OTf)₃ is 60wt%, 150uL) to become a CR20232 coin cell, which is an aluminum battery in Example 1. Here, the second slurry uses water as the solvent and is rotated and ground in a container with zirconium balls by centrifugal force to improve the uniform dispersion of the materials in the second slurry.

### <Example 2>

The preparation method of the aluminum battery in Example 2 is similar to that of the aluminum battery in Example 1. The difference lies in that the third slurry is composed of 56wt% AQ, 24% AC, 10wt% Super-P, and 1.88wt% CMC, and 8.12wt% SBR, and the thickness of the negative electrode is 60 µm.

### <Example 3>

The preparation method of the aluminum battery in Example 3 is similar to that of the aluminum battery in Example 1. The difference lies in that the third slurry is composed of 80wt% PTCDI, 10wt% Super-P, 1.88wt% CMC, and 8.12wt% SBR, and the thickness of the negative electrode is 58.3 µm.

### <Example 4>

The preparation of the aluminum battery in Example 4 is similar to that of the aluminum battery in Example 1. The difference lies in that the third slurry is composed of 56wt% PTCDI, 24% GO, 10wt% Super-P, and 10wt% PVDF, and the thickness of the negative electrode is 22.5 µm.

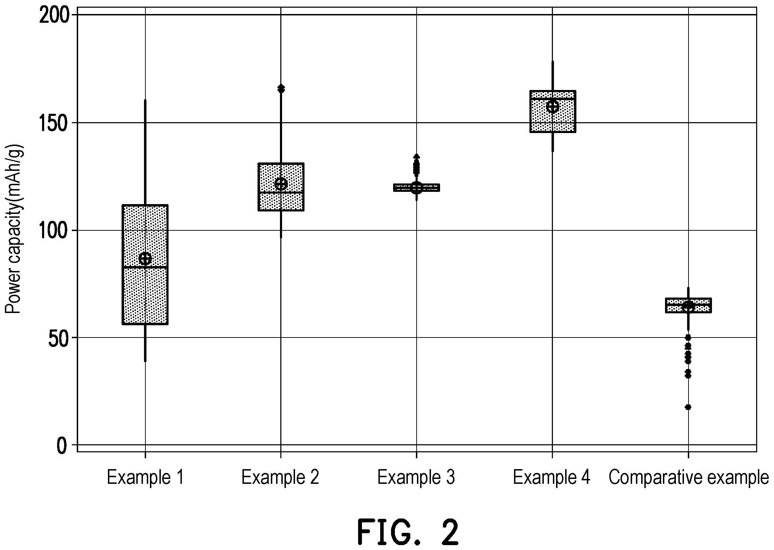

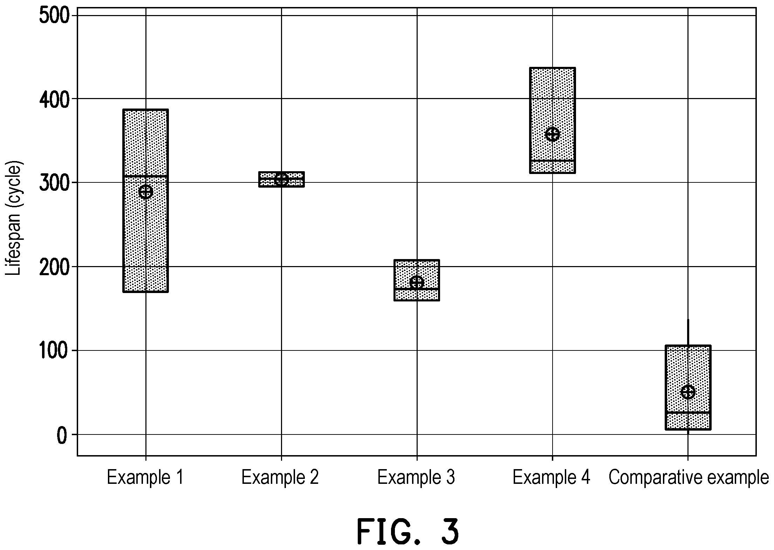

FIG. 2 is a schematic diagram of results in a power capacity test of examples and a comparative example. FIG. 3 is a schematic diagram of results in a lifespan test of examples and a comparative example. FIG. 2 and FIG. 3 do the test by a chronopotentiometry (charge/discharge the battery with a fixed current, and set a cut-off potential condition for switching from charging to discharging/switching from discharging to charging, where the fixed current is usually a multiple of the weight of V₂O₃ in the coating of the positive electrode. In this case, the multiple is 0.26 times, for example, in the coating of the positive electrode, V₂O₃ accounts for 1g, then the current value is 0.26A, and the cut-off potential is set. After charging to 1.8V, the constant current turns to discharge, and switches to charge after discharging to 0.1V, and then repeats again to become a charge and discharge cycle. The Coulomb efficiency refers to the ratio of the discharge capacity and the charging capacity of the same cycle), and the Coulomb efficiency can be obtained by dividing the discharge capacity by the charging capacity. The total number of cycles with Coulombic efficiency >80% in the charge and discharge process is used as the criterion for judging lifespan.

The test results are shown in FIG. 2 to FIG. 3, and the conclusions are as follows. As shown in FIG. 2 and FIG. 3, the acid anhydride material is used as the negative electrode (PTCDI materials or AQ) with the metal oxide (V₂O₃) positive electrode and Al(OTf)₃ electrolyte, so the battery has a significant improvement in performance of power capacity. The average power capacity of the battery is increased from 63.3mAh/g to 157.2mAh/g (the highest power capacity in Example 4), and the performance of power capacity is increased by 2.4 times. The average lifespan of the aluminum battery is increased from 49 to 357 cycles, and the lifespan is increased by 7.2 times. Therefore, the aluminum battery of the disclosure can indeed extend the lifespan and maintain better performance of power capacity by the synergistic effect of the positive electrode using the intercalation mechanism, the negative electrode using the chelating mechanism, and the aqueous electrolyte.

In summary, the aqueous electrolyte is used in the aluminum battery of the disclosure to generate the small-sized ions which are less likely to damage the structure of the positive electrode, so that the intercalation mechanism can be effectively performed. Moreover, the aforementioned small-sized ions replace the electrochemical mechanism with the chelating mechanism performed by the negative electrode to avoid the formation of aluminum dendrites, thereby extending the lifespan and maintaining better performance of power capacity.

### Reference Sign List

- 100:: aluminum battery
- 110:: positive electrode
- 111:: first metal substrate
- 112:: first coating
- 120:: negative electrode
- 121:: second metal substrate
- 122:: second coating
- 130:: separator
- 140:: aqueous electrolyte

## Claims

1. An aluminum battery (100), comprising:
a positive electrode (110);
a negative electrode (120);
a separator (130), disposed between the positive electrode (110) and the negative electrode (120); and
an aqueous electrolyte (140), impregnated into the separator (130), the positive electrode (110), and the negative electrode (120), wherein the positive electrode (110) performs an intercalation mechanism when the aluminum battery (100) operates, and the negative electrode (120) performs a chelating mechanism.

2. The aluminum battery (100) according to claim 1, wherein an active material in the aqueous electrolyte (140) is an aluminum ion when the aluminum battery (100) operates.

3. The aluminum battery (100) according to claim 1, wherein the aqueous electrolyte (140) comprises water and an aluminum salt.

4. The aluminum battery (100) according to claim 3, wherein a weight proportion of the aluminum salt in the aqueous electrolyte (140) is 30wt% to 50wt%, and a total weight proportion of the water and the aluminum salt is 100wt %.

5. The aluminum battery (100) according to claim 1, wherein the positive electrode (110) comprises a first metal substrate (111) and a first coating (112), the first coating (112) is disposed on the first metal substrate (111), and the first coating (112) comprise a metal oxide.

6. The aluminum battery (100) according to claim 5, wherein a weight proportion of the metal oxide in the first coating (112) is greater than or equal to 80wt% and less than 100wt%.

7. The aluminum battery (100) according to claim 1, wherein the negative electrode (120) comprises a second metal substrate (121) and a second coating (122), the second coating (122) is disposed on the second metal substrate (121), and the second coating (122) comprises a conjugated organic molecule.

8. The aluminum battery (100) according to claim 7, the conjugated organic molecule comprises a compound with an acid anhydride structure, a derivative compound with the acid anhydride structure, a composite of the compound with the acid anhydride structure and a carbon material, or a composite of the derivative compound with the acid anhydride structure and the carbon material.

9. The aluminum battery (100) according to claim 7, wherein a weight proportion of the conjugated organic molecule in the second coating (122) is greater than or equal to 80wt% and less than 100wt%.

10. The aluminum battery (100) according to claim 1, wherein a thickness of the separator (130) is 200 µm to 500 µm.
